Europäisches Patentamt

European Patent Office

Office européen des brevets

(11) Publication number: **0 393 981 B1**

(12) **EUROPEAN PATENT SPECIFICATION**

(45) Date of publication of patent specification: **21.06.95**  (51) Int. Cl.⁶: **B41J 2/435**

(21) Application number: **90304097.0**

(22) Date of filing: **17.04.90**

(54) Line printer.

(30) Priority: **17.04.89 JP 97080/89**
**10.07.89 JP 177487/89**

(43) Date of publication of application:
**24.10.90 Bulletin 90/43**

(45) Publication of the grant of the patent:
**21.06.95 Bulletin 95/25**

(84) Designated Contracting States:
**DE FR GB**

(56) References cited:
**DE-A- 3 409 406**
**DE-A- 3 843 645**
**US-A- 4 551 737**

(73) Proprietor: **TOKYO ELECTRIC CO., LTD.**
**6-13, 2-chome, Nakameguro**
**Meguro**
**Tokyo (JP)**

(72) Inventor: **Tamura, Toshiyuki**
**6-17 Asahigaoka,**
**Mishima**
**Shizuoka (JP)**
Inventor: **Mochizuki, Masaru**
**197-1 Kusunokishinden,**
**Shimizu**
**Shizuoka (JP)**
Inventor: **Iga, Kaname**
**9 Dotehata,**
**Nirayama-cho,**
**Tagata**
**Shizuoka (JP)**
Inventor: **Kikuchi, Takashi**
**Hara-danchi,**
**K-305, 990-11 Otsuka,**
**Numazu**
**Shizuoka (JP)**

(74) Representative: **Tribe, Thomas Geoffrey et al**
**F.J. Cleveland & Company**
**40-43 Chancery Lane**
**London WC2A 1JO (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

FIELD OF THE INVENTION AND RELATED ART STATEMENT:

The present invention relates to a line printer which comprises a line head constituted by an array of electroluminescent (EL) devices.

In recent years, various kinds of printer have been developed in keeping with ongoing improvements in the so-called office automation equipment. One of such printer variations is the line printer.

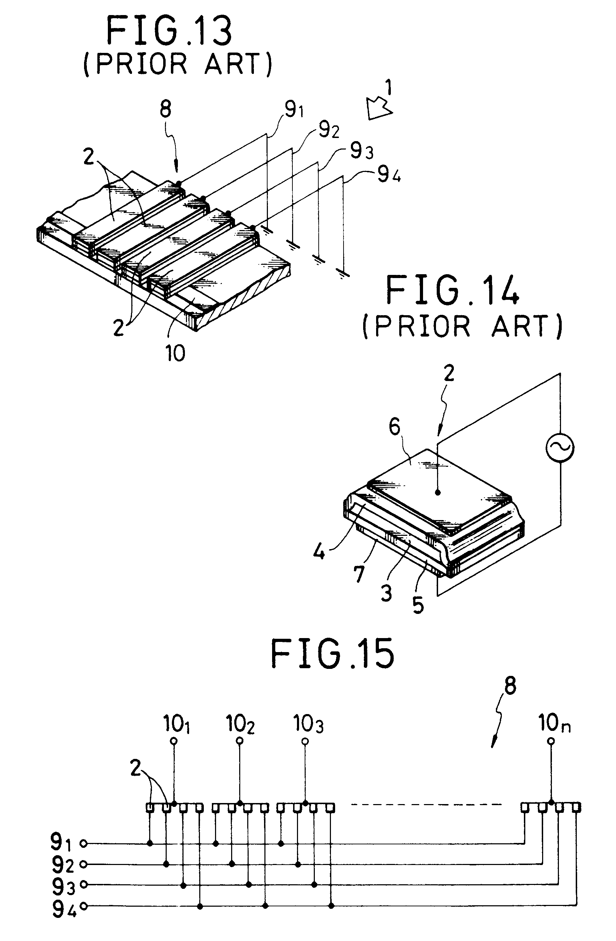

A conventional line printer is described below by referring to Figs. 13 and 14. Fig. 14 illustrates the construction of an edge emission type EL device 2 for use with an edge emission type EL printer that is the line printer to be described. The edge emission type EL device 2 is constituted by dielectric layers 4 and 5 sandwiching from up and down a thin film active layer 3 that contains zinc sulfide and some active elements. The dielectric layers 4 and 5 are respectively covered from up and down with flat electrodes 6 and 7. An edge of the active layer 3 emits a flatly polarized beam of light. The emitted light is about 100 times as intense as that from a typical prior art EL device, the latter emitting light from the top thereof. As depicted in Fig. 13, a plurality of the edge emission type EL devices whose construction was outlined above are arranged side by side to constitute an edge emission type EL device array 8 using thin film technology or other suitable methods. The array is used as a line head which is placed opposite to or in otherwise suitable relation to a photosenstive drum, not shown, to make up an edge emission type EL printer 1.

This applicant proposed that the line head constituted by the edge emission type EL device array 8 is to be connected to a driving circuit, not shown, in the manner illustrated in Fig. 15. That is, blocks each made up of four edge emission type EL devices 2 constitute block electrodes $10_1$ through $10_n$ which are connected to four common electrodes $9_1$ through $9_4$ in a matrix pattern.

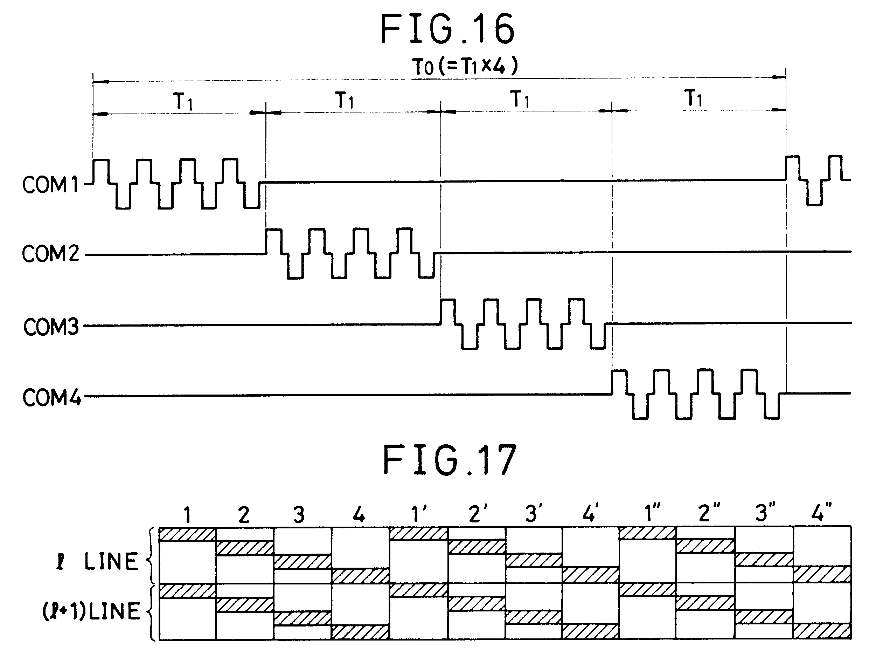

In the construction above, the edge emission type EL printer 1 causes the edge emission type EL devices 2 of the line head to selectively luminesce, thereby producing an electrostatic latent image on the photosensitive drum for printing by electrophotography. The printer 1 regards four EL devices 2 as a single block. As many as "n" block electrodes $10_1$ through $10_n$ are each connected to the four common electrodes $9_1$ through $9_4$, the two groups of electrodes carrying out primary scanning in synchronization. As illustrated in Fig. 16, the block electrodes $10_1$ through $10_n$ are scanned relative to the first to fourth common electrodes $9_1$ through $9_4$, consecutively in that order. If the scanning time required for scanning relative to each of the common electrodes $9_1$ to $9_4$ is $T_1$, one primary scanning line is formed within the time period of

$$T_0 = T_1 \times 4$$

With the edge emission type EL printer 1 mentioned above, each dot is either white or black. To express intermediate degrees of print density requires the use of areal gradation methods such as dithering. The dithering method involves establishing a threshold value matrix with each of the pixels in the matrix pattern assigned a different threshold value. The threshold value of each pixel in the threshold matrix is compared in density with the corresponding pixel of the image to be reproduced in areal gradation. However, such areal gradation methods necessarily entail deteriorated levels of resolution and hence low levels of image quality. A positive aspect of this edge emission type EL printer 1 is that it achieves reductions in wiring complexity and in driver count by turning numerous EL devices 2 into blocks of four. Within each block, however, the first dot is out of timing with the fourth dot by as long as 3 $T_1$. This discrepancy results in printed lines which are inclined in each block and of which the edges are serrated, thus producing a printed image of low quality.

Furthermore, line printers may gradually deteriorate in the sensitivity of the photosensitive drum as well as in the luminous intensity of the line head due to secular change and other kinds of wear. In such a case, adjustments are needed to take compensating measures including raising of the voltage supplied to the EL devices in the line head. These adjustments are complicated and often accompanied by reductions in the print speed, the reductions being needed to compensate for the lowered luminous intensity for the line head as mentioned above.

DE-A-3,409,406 discloses a method of expressing intermediate degrees of print density by controlling the driving frequency of a liquid crystal device. The present invention aims to solve the problem when using an EL device and in a manner which gives greater control of grey scales than in this prior art.

OBJECT AND SUMMARY OF THE INVENTION:

It is therefore an object of the present invention to provide a line printer which permits easy control of the luminous intensity of the EL devices incorporated therein.

It is another object of the present invention to provide a line printer which expresses varying degrees of intermediate print density without deterioration in the resolution of the image it prints and substantially without gradation.

It is a further object of the present invention to provide a line printer which controls the print density without reducing its print speed.

It is yet another object of the present invention to provide a line printer which automatically maintains the print density if there occurs any reduction in the sensitivity of its photosensitive drum or in the luminous intensity of its line head.

According to the present invention, there is provided an edge emission EL printer comprising:

a line head constituted by m x n edge emission EL devices connected in a matrix pattern to m common electrodes and n block electrodes,

a photosensitive body located adjacent to said line head so that said photosensitive body continuously moves relative to said line head for secondary scanning, and

a driving circuit driving said line head in accordance with a print signal so as to generate dot emission onto said photosensitive body for primary scanning,

characterised by a driving circuit and a luminous intensity changing means, said luminous intensity changing means changing the luminous intensity of said edge emission EL devices by controlling the number of pulses which are input to said edge emission EL devices in accordance with said print signal containing print density information on each pixel so as to form a single dot, said driving circuit driving said line head so as to generate a plurality of line emissions for single primary scanning so that a single pixel is formed by means of a plurality of dots.

Preferably said devices are changed in luminous intensity in accordance with the number of input pulses input within a predetermined time, that is with the frequency of the input pulses, said line head is located adjacent to a photosensitive body with a linear photosensitive characteristic so that said photosensitive body continuously can move relative to said line head for secondary scanning, said edge emission EL printer further comprising a driving circuit and a print density control means, said driving circuit outputting pulses to said line head at varying frequencies, and said print density control means changeably setting the frequency of the output pulses from said driving circuit.

Preferably a print density data retaining means is provided, said print density data retaining means being arranged to retain the print density data which specify the frequency of the output pulses from said driving circuit, said print density control means being arranged to change, as needed, the print density data retained by said print density data retaining means.

A recording counter may be provided, said recording counter being arranged to accumulate the number of printed pieces of a recording medium, and said print density control means controlling said line head in luminous intensity in accordance with count values from said recording counter.

BRIEF DESCRIPTION OF THE DRAWINGS:

Fig. 1 is a set of timing charts and views which help to explain a first embodiment of the invention, showing how a control signal for the edge emission type EL device is timed and how the luminous characteristic of the EL device behaves in connection with the first embodiment;

Fig. 2 is an illustration of the photosensitive characteristic of the photosensitive drum for use in the first embodiment;

Fig. 3 is a timing chart in connection with the first embodiment;

Fig. 4 is a view of a printed image in connection with the first embodiment;

Fig. 5 is a view of an electrical construction of the first embodiment;

Figs. 6 and 7 are side views of the line printer as it is practiced in the first embodiment;

Fig. 8 is a block diagram showing a second embodiment of the present invention;

Fig. 9 is a view depicting the relationship between the luminous intensity of the edge emission type EL device for use in the second embodiment on the one hand, and the frequency of input pulses therefor on the other;

Fig. 10 is a block diagram of a third embodiment of the present invention;

Fig. 11 is a flowchart showing how the third embodiment works;

Fig. 12 is a block diagram of a fourth embodiment of the present invention;

Fig. 13 is a perspective view of a prior art EL device arrangement;

Fig. 14 is a perspective view of the edge emission type EL device used in the Figure 13 arrangement:

Fig. 15 is an illustration of a novel circuit arrangement for connection of the prior art EL device circuit;

Fig. 16 is a timing chart in connection with the prior art EL device arrangement; and

Fig. 17 is a view of a printed image for explanatory purposes.

DETAILED DESCRIPTION OF PREFERRED EMBODIMENTS:

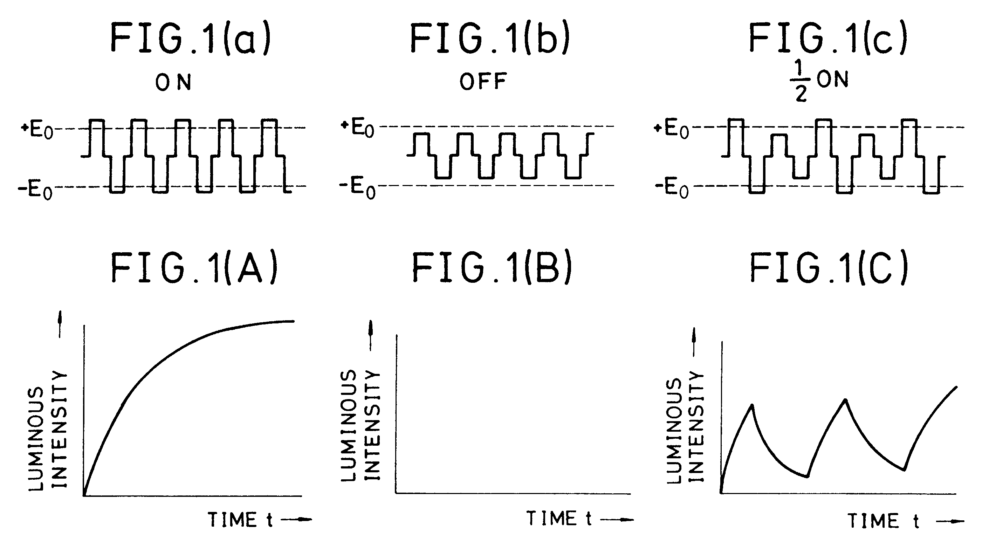

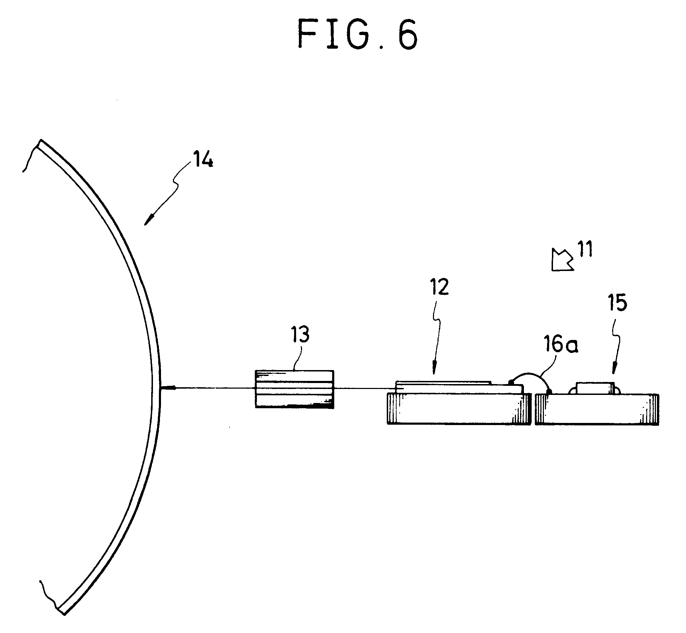

A first embodiment of the present invention will now be described by referring to Figs. 1 through 5. The parts that are identical to those already described in connection with the prior art example are designated by the same reference characters, and any repetitive description thereof is omitted. Fig. 6 illustrates the construction of an optical section and its related parts for use with an edge emission type EL printer 11 which is the line printer as the first embodiment. In the printer 11, a line head 12 is constituted substantially in the same manner as the above-described edge emission type EL device array 8. On the optical axis of the line head 12 is a rod lens array 13 installed opposite to a photosensitive drum 14 which corresponds to the photosensitive body mentioned above. The line head 12 and its driving circuit 15 are connected in a novel matrix pattern shown in Fig. 15, with common electrodes $16_1$ through $16_m$ bonded to block electrodes $17_1$ through $17_n$ by means of bonding wires 16a and others.

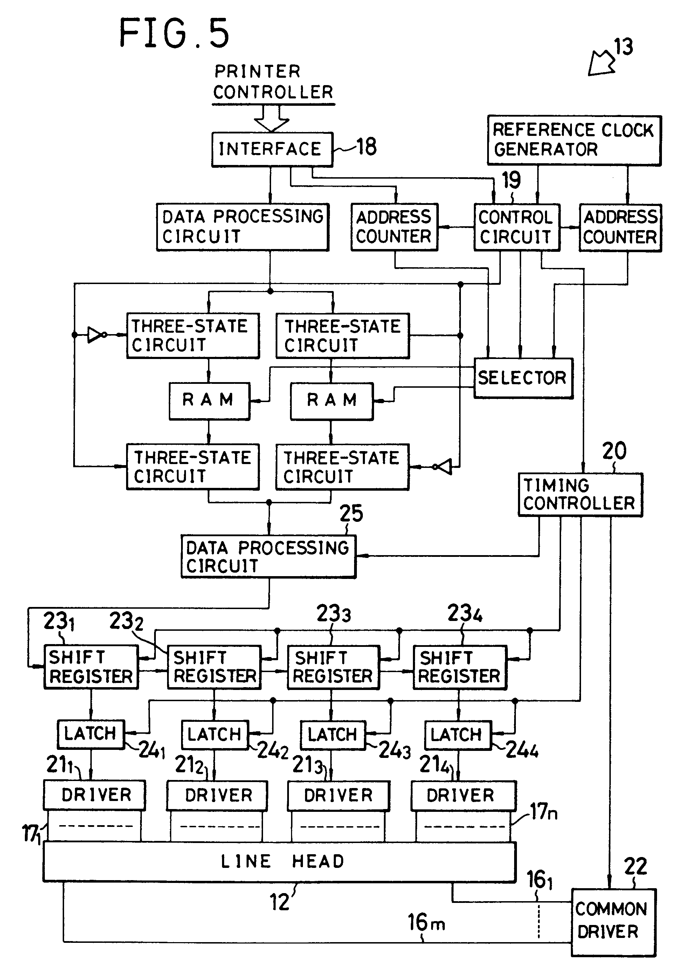

The driving circuit 15 of the edge emission type EL printer 11 will now be described by referring to the block diagram of Fig. 5. A timing controller 20 is connected to an interface 18 via a control circuit 19. The timing controller 20 is connected to the line head 12 via a common driver 22 as well as via drivers $21_1$ through $21_4$ which in turn are connected to the block electrodes $17_1$ through $17_n$ and to the common electrodes $16_1$ through $16_m$. To the drivers $21_1$ through $21_4$ are connected shift registers $23_1$ through $23_4$ as well as a data processing circuit 25, the circuit being a luminous intensity changing means. The timing controller 20 is also connected to the components 23 through 25.

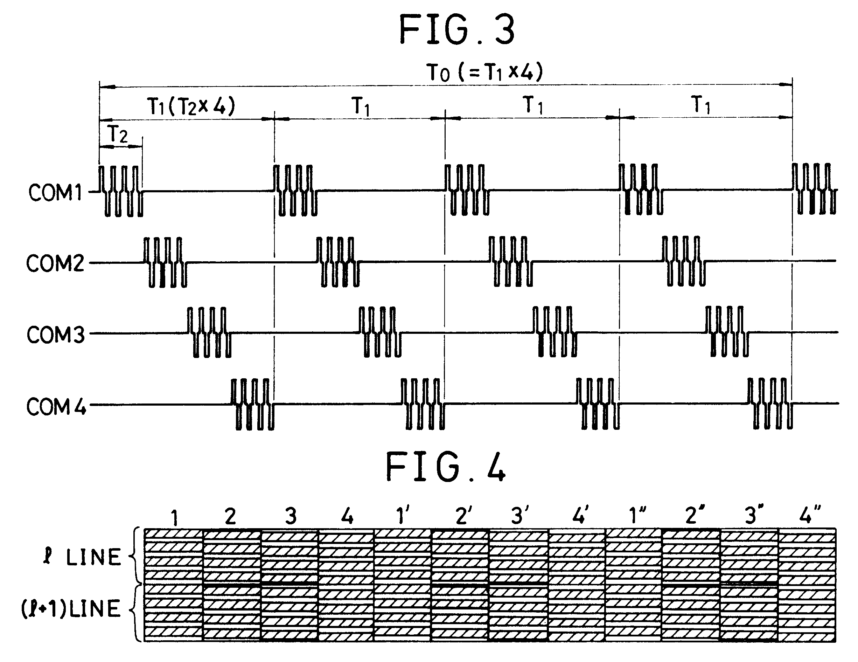

What follows is a description of how the edge emission type EL printer provides primary scanning lines in the construction described above. A print signal input through the interface 18 is temporarily stored and compressed or otherwise processed. As shown in Fig. 3, the timing controller 20 then generates a print signal that triggers line emission four times to form a single primary scanning line. Thus the line head 12 repeats line emission four times during a printing time $T_0$ for one primary scanning line. As illustrated in Fig. 4, the printed line has the serrated dislocation on its edge reduced to a quarter of that of the image shown in Fig. 17. The serrated dislocation in Fig. 4 appears virtually flat, making the quality of the printed image very high. The edge emission type EL printer 11 in the first embodiment forms one primary scanning line from four line emissions. The line emission count may be determined by taking various factors into account. Higher line emission counts or the concomitant use of a lens-based optical system can generate dots in solid pattern by overlaying black portions of the printed image. This further improves the printed image quality.

More specifically, the driving frequency is about 75 kHz. The number of applied pulses per pixel is variable from 1 to 15. The higher the pulse count, the higher the print density. The driving frequency may be varied up to about 100 kHz. The higher the frequency, the higher the print density.

How to gradate the print density for the edge emission type EL printer 11 will now be described. The timing controller 20 causes the common driver 22 to supply a voltage to the line head 12 via the common electrodes $16_1$ through $16_m$. When print information is input through the interface 18, the control circuit 19 generates signals accordingly. The signals are input consecutively to the drivers $21_1$ through $21_4$ via the shift registers $23_1$ through $23_4$ as well as latches $24_1$ through $24_4$. In turn, the drivers $21_1$ through $21_4$ suitably cause the block electrodes $17_1$ through $17_n$ to apply a voltage to the line head. The voltages applied from the matrix electrodes 16 and 17 to the line head 12 are synchronized in this manner to control the emission therefrom.

Where black and white dots are to be printed, the voltage to be supplied to each edge emission type EL device 2 needs to be below or above a threshold voltage for emission, $\pm E_0$, substantially at all times, as depicted in Figs. 1 (a) and 1 (b). In this case, as shown in Fig. 1 (A), it takes a little time for each EL device to excite its emission.

Thus the edge emission type EL printer 11 prints dots of intermediate density by taking advantage of the fact that it takes each edge emission type EL device 2 a little time to excite its emission. That is, when the data processing circuit 25 admits a print signal containing print density information, the block electrodes $17_1$ through $17_n$ accordingly pulse-modulate the voltage that they supply. Each edge emission type EL device 2 is then given a voltage whose threshold value is not frequently below or above the value $E_0$, as shown in Fig. 1 (c). In response, the EL device 2 blinks at infinitesimal intervals. The luminous intensity in this case is about half of the ordinary emission.

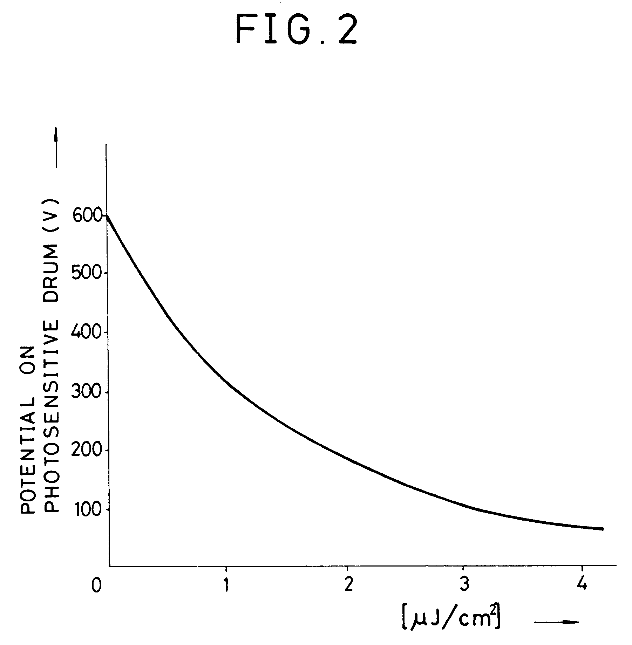

As illustrated in Fig. 2, the edge emission type EL printer 11 has a photosensitive drum 14 whose photosensitive characteristic is linear. When the drum 14 bears 600 V and receives light with a luminous intensity of 1 $\mu$J/cm$^2$, the potential level thereof is 300 V. Likewise, a luminous intensity of 2 $\mu$J/cm$^2$ corresponds to a potential level of 200 V, 3 $\mu$J/cm$^2$ to 100 V, and so on. What takes place here is that the photosensitive drum 14 is optically scanned by the line head 12 comprising the edge emission type EL devices 2 whose luminous intensity varies in gradation. This provides control over the quantity of the toner that sticks to the photosensitive drum 14, thereby making it possible to print an image containing dots of ungradated density variations from solid black to white.

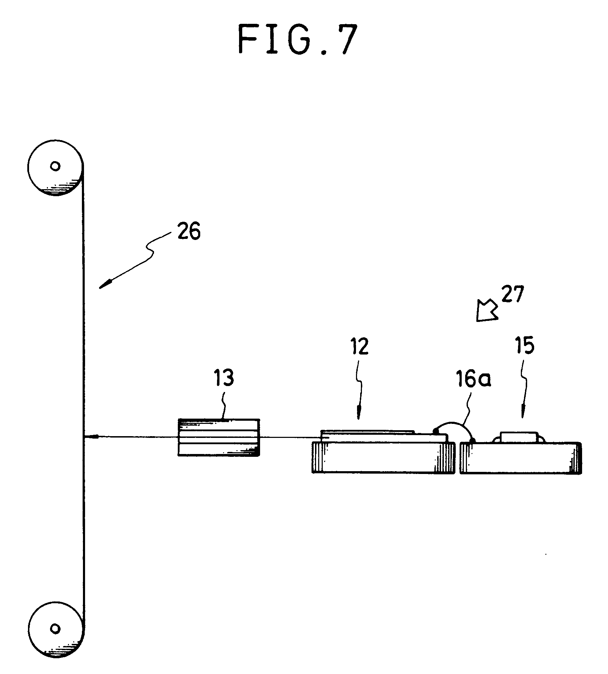

It will be appreciated that the present invention is not limited to the line printer of the first embodiment which, as indicated, is the edge emission type EL printer 11 comprising the edge emission type EL devices 2 as its light-emitting devices. Alternatively, the invention may be applied to line printers that use light-emitting devices whose luminous intensity varies with the number of input pulses. It will also be appreciated that the photosensitive drum 14 with its linear photosensitive characteristic for use with the first embodiment is not the only photosensitive body to which the invention is limited. Alternatively, a photosensitive paper 26 whose photosensitive characteristic is linear may be used, as shown in Fig. 7, in a line printer 27.

The edge emission type EL printer 1 of the first embodiment generates one primary scanning line from four line emissions. This means that four dots exist within a single pixel. It is thus possible to set differently the density of each of the dots in each pixel for diverse kinds of gradated expression in print.

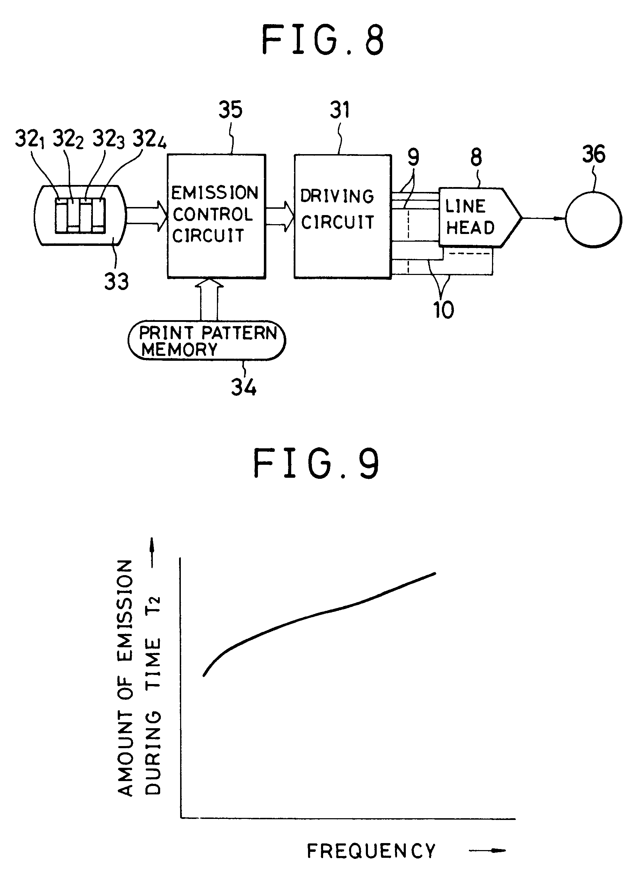

A second embodiment of the present invention will now be described by referring to Figs. 8 and 9. The parts that are identical to those already described in connection with the first embodiment are designated by the same reference characters, and any repetitive description thereof is omitted. The construction of the edge emission type EL device 2 for use with the line printer is the same as the prior art arrangement illustrated in Fig. 14. The edge emission type EL device 2 is constituted by dielectric layers 4 and 5 sandwiching from up and down the thin film active layer 3 that contains zinc sulfide and other active elements. The dielectric layers 4 and 5 are respectively covered from up and down with the flat electrodes 6 and 7. An edge of the active layer 3 emits a flatly polarized beam of light. The emitted light is about 100 times as intense as that from a typical prior art EL device, the latter emitting light from the top thereof. As shown in Fig. 9, the luminous intensity varies with the frequency of input pulses, i.e., with the number of pulses that are input within a unit time $T_2$. Thus, in the same way as the arrangement depicted in Fig. 13, a plurality of the edge emission type EL devices whose construction was outlined above are arranged side by side using thin film technology or other suitable methods so as to constitute, in combination with a rod lens array, not shown, the line head 8. As illustrated in Fig. 15, the edge emission type EL devices 2 making up the line head 8 are connected in a matrix pattern to a driving circuit 31 through suitable numbers of the common electrodes 9 and block electrodes 10. To the driving circuit 31 for the line head 8, there are connected via an emission control circuit 35 a print pattern memory 34 and a print density control panel 33 comprising four DIP switches $32_1$ through $32_4$ that make up the print density control means.

The line printer 1 of the second embodiment has a photosensitive drum 36 with a linear photosensitive characteristic (Fig. 2) surrounded close by the line head 8 together with a charging machine, a developing machine and a transfer machine, not shown. The linear photosensitive characteristic means that the luminous intensity of the incident light varies in substantially linear relation to the surface potential of the photosensitive drum. The characteristic includes both primary and secondary rates of change.

What follows is a description of how the line printer 1, in the construction described above, generates primary scanning lines. An input print signal is temporarily stored and compressed or otherwise processed. As shown in Fig. 3, the print pattern memory 34 then transmits a plurality of print signals of the same pattern to the emission control circuit 35 in order to generate one primary scanning line. This operation is performed so as to be in keeping with the fact that the outgoing beam of light from each edge emission type EL device 2 of the line head 8 is flat. A series of flat outgoing beams of light is made to continue in the secondary scanning direction to continuously print a plurality of flat pixel components making up a substantially square pixel. The emission control circuit 35 causes the line head 8 to repeat its light emission four times within the time $T_0$ required to print one primary scanning line. The result is a significantly high level of print quality for the printed line whose serrated dislocation at its edge turns out to be substantially flat.

The line printer 1 of the second embodiment generates one primary scanning line from four line emissions. The number of line emissions may be determined by taking various factors into account. Higher line emission counts or the concomitant use of a lens-based optical system can generate dots in solid pattern by overlaying black portions of the printed image. This further improves the printed image quality.

In addition, the line printer 1 of the second embodiment has the circumferential surface of its photosensitive drum 36 charged with a voltage from the charging machine, the drum being rotated at a constant speed. When the line head 8 triggers its emission, the charged surface is selectively neutralized thereby to form an electrostatic latent image. The image is developed by the toner supplied by the developing machine, and then transferred to a recording medium (a sheet of paper, not shown) by a transfer voltage from the transfer machine to complete the printing process.

This line printer 1 has its emission control circuit 35 connected to the print density control panel 33 comprising the four DIP switches $32_1$ through $32_4$. When it is desired to raise the print density, the DIP switches $32_1$ through $32_4$ are suitably set to control the driving circuit 31 in its output. Suitably setting the switches establishes the number of pulses that the driving circuit 31 inputs to the edge emission type EL devices 2 within a unit time $T_2$. This in turn changes the luminous intensity of the line head 8 as needed.

The table below shows what kind of relationship typically develops between the settings of the DIP switches $32_1$ through $32_4$ on the one hand, and the numbers of pulses (P) that the driving circuit 31 inputs to the edge emission type EL devices 2 within the unit time $T_2$ on the other.

| DIP switch settings | | | | No. of pulses P input to EL devices within unit time $T_2$ |
|---|---|---|---|---|
| $12_1$ | $12_2$ | $12_3$ | $12_4$ | |
| OFF | OFF | OFF | OFF | 1 |
| OFF | OFF | OFF | ON | 2 |
| OFF | OFF | ON | OFF | 3 |
| OFF | OFF | ON | ON | 4 |
| ↓ | ↓ | ↓ | ↓ | ↓ |
| ON | ON | ON | OFF | 15 |
| ON | ON | ON | ON | 16 |

As indicated, the line printer 1 has its four DIP switches $32_1$ through $32_4$ suitably operated to change the luminous intensity of the line head 8 in 16 stages, thereby varying the electrostatic adsorbability for the latent image on the photosensitive drum 36 whose photosensitive characteristic is linear. That is, the line printer 1 controls the quantity of the toner that sticks to the photosensitive drum 36 in order to set a desired state of print density.

It will be appreciated that the present invention is not limited to the line printer 1 of the second embodiment which uses the edge emission type EL devices 2 as its light-emitting devices. Alternatively, the invention may be applied to line printers that use light-emitting devices whose luminous intensity varies with the frequency of input pulses. It will also be appreciated that the photosensitive drum 36 with its linear photosensitive characteristic for use with the second embodiment is not the only photosensitive body to which the invention is limited. Alternatively, a photosensitive paper, not shown, whose photosensitive characteristic is linear, may be used instead.

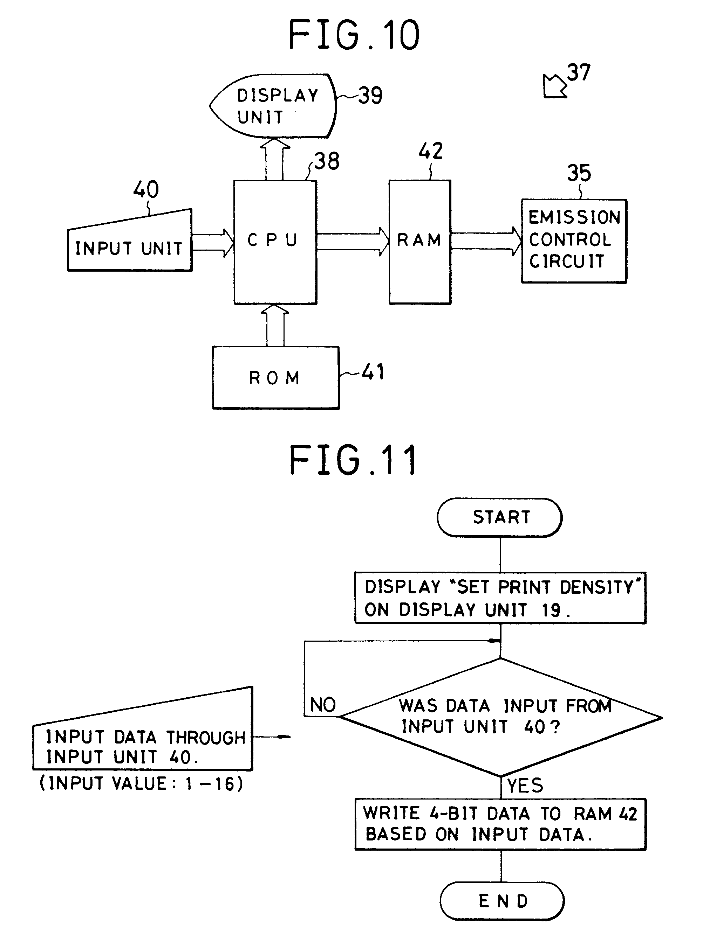

A third embodiment of the present invention will now be described by referring to Figs. 10 and 11. This line printer 37 has a CPU 38 connected to a display unit 39, an input unit 40 and a ROM 41. The CPU 38 acts as the print density control means, the input unit 40 comprises a keyboard, and the ROM 41 contains a control program that controls the CPU 38. The CPU 38 is connected to the emission control circuit 35 via a four-bit RAM 42 which is a print density data retaining means. The other aspects of the printer construction are the same as those of the line printer 1.

As with the line printer 1, the line printer 37 whose construction was described above generates one primary scanning line from four line emissions for printing.

In the line printer 37, the RAM 42 connectively installed between the CPU 38 and the emission control circuit 35 contains print density data specifying the frequency of pulses to be input to the edge emission type EL devices 2. The control program which is stored in the ROM 41 and which controls the CPU 38 runs as described in the flowchart of Fig. 11. Before the line printer 37 is started, the CPU 38 displays a print density setting request on the display unit 39 and waits for an input to come in from the input unit 40. In response to an input value from the input unit 40, print density data is written to the RAM 42. Based on the data, the emission control circuit 35 controls the driving circuit 31 in its output. This determines the number of pulses that the driving circuit 31 inputs to the edge emission type EL devices 2 within the unit time $T_2$, thereby changing the luminous intensity of the line head 8.

6

The table below shows what kind of relationship typically develops among the data coming from the input unit 40, the four-bit print density data written to the RAM 42, and the numbers of pulses (P) that are input to the edge emission type EL devices 2 within the unit time $T_2$.

| Data from input unit | Print density data in RAM 42 | | | | No. of pulses input to EL devices within unit time $T_2$ |
|---|---|---|---|---|---|
| | 3 | 2 | 1 | 0 | |
| 1 | 0 | 0 | 0 | 0 | 1 |
| 2 | 0 | 0 | 0 | 1 | 2 |
| 3 | 0 | 0 | 1 | 0 | 3 |
| 4 | 0 | 0 | 1 | 1 | 4 |
| ↓ | ↓ | ↓ | ↓ | ↓ | ↓ |
| 15 | 1 | 1 | 1 | 0 | 15 |
| 16 | 1 | 1 | 1 | 1 | 16 |

As indicated, the line printer 37 changes the luminous intensity of the line head 8 in 16 stages by updating the print density data in the RAM 42. Desired print density levels are subsequently set in the same manner as with the line printer 1.

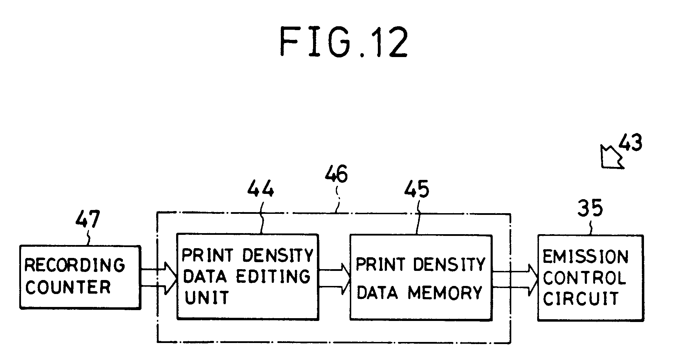

A fourth embodiment of the present invention will now be described by referring to Fig. 12. This line printer 43 has the emission control circuit 35 connected to a print density control means 46 comprising a print density data editing unit 44 and a print density data memory 45. To the print density control means 46 is connected a recording counter 47 which is combined with a sheet delivery unit, not shown, and which accumulates the number of printed and delivered sheets of paper.

In the construction described above, the line printer 43 prints images by generating a plurality of line emissions in the same manner as do the line printers 1 an 37.

As with the line printer 37, the line printer 43 has the print density data memory 45 connectively installed between the print density data editing unit 44 and the emission control circuit 35, the memory 45 containing print density data specifying the frequency of pulses to be input to the edge emission type EL devices 2. The print density data editing unit 44 edits the count value from the recording counter 47 to update the print density data in the print density data memory 45. Based on the data in the memory 45, the emission control circuit 35 controls the driving circuit 31 in its output. This determines the number of pulses that the driving circuit 31 inputs to the edge emission type EL devices 2 within the unit time $T_2$, thereby changing the luminous intensity of the line head 8.

The table below shows what kind of relationship typically develops among the count values on the recording counter 47, the print density data written to the print density data memory 45, and the numbers of pulses (P) that are input to the edge emission type EL devices 2 within the unit time $T_2$.

| Sheet count value on recording counter 47 | Print density data written to print density data memory 45 | | | | No. of pulses input to EL devices within unit time $T_2$ |
|---|---|---|---|---|---|
| | $D_4$ | $D_3$ | $D_2$ | $D_1$ | |
| 0 - 4,999 | 0 | 0 | 0 | 0 | 3 |
| 5,000 - 9,999 | 0 | 0 | 0 | 1 | 4 |
| 10,000 - 14,999 | 0 | 0 | 1 | 0 | 5 |
| ↓ | ↓ | ↓ | ↓ | ↓ | ↓ |
| 70,000 - 74,999 | 1 | 1 | 1 | 0 | 17 |
| 75,000 - | 1 | 1 | 1 | 1 | 18 |

As indicated, the line printer 43 changes the frequency of pulses that are input to the edge emission type EL devices 2 in accordance with the number of sheets printed. Therefore, if there occur reductions in the sensitivity of the photosensitive drum 36 or in the luminous intensity of the line head 8 due to secular change or to other factors of wear, the line printer 43 automatically compensates for such deterioration in order to maintain its printing capabilities.

## Claims

1.  An edge emission EL printer (11) comprising:
    a line head (12,8) constituted by m x n edge emission EL devices (2) connected in a matrix pattern to m common electrodes (16) and n block electrodes (17),
    a photosensitive body (14,36) located adjacent to said line head so that said photosensitive body continuously moves relative to said line head for secondary scanning, and
    a driving circuit driving said line head in accordance with a print signal so as to generate dot emission onto said photosensitive body for primary scanning,
    characterised by a driving circuit (15) and a luminous intensity changing means (25), said luminous intensity changing means changing the luminous intensity of said edge emission EL devices by controlling the number of pulses which are input to said edge emission EL devices in accordance with said print signal containing print density information on each pixel so as to form a single dot, said driving circuit driving said line head so as to generate a plurality of line emissions for single primary scanning so that a single pixel is formed by means of a plurality of dots.

2.  An edge emission EL printer according to claim 1 characterised in that said devices are arranged to be changed in luminous intensity in accordance with the number of input pulses input within a predetermined time, that is with the frequency of the input pulses, said line head is located adjacent to a photosensitive body with a linear photosensitive characteristic so that said photosensitive body continuously can move relative to said line head for secondary scanning, said edge emission EL printer further comprising a driving circuit (31) and a print density control means (32), said driving circuit outputting pulses to said line head at varying frequencies, and said print density control means changeably setting the frequency of the output pulses from said driving circuit.

3.  An edge emission EL printer according to claim 2, characterised by a print density data retaining means (42), said print density data retaining means being arranged to retain the print density data which specify the frequency of the output pulses from said driving circuit (31), said print density control means (38) being arranged to change, as needed, the print density data retained by said print density data retaining means.

4.  An edge emission EL printer according to claim 2 or 3, further comprising a recording counter (47), said recording counter being arranged to accumulate the number of printed pieces of a recording medium, and said print density control means (46) controlling said line head in luminous intensity in accordance with count values from said recording counter.

## Patentansprüche

1.  Kantenemissions-EL-Drucker (11), welcher umfaßt:
    einen Zeilenkopf (12, 18), der gebildet ist durch m x n Kantenemissions-EL-Elemente (2), die in einer Matrixverteilung mit m gemeinsamen Elektroden (16) und n Blockelektroden (17) verbunden sind,
    einen photoempfindlichen Körper (14, 36), der benachbart zu dem Zeilenkopf so angeordnet ist, daß der photoempfindliche Körper sich kontinuierlich relativ zu dem Zeilenkopf zur Sekundärabtastung bewegt, und
    eine Treiberschaltung, welche den Zeilenkopf entsprechend einem Drucksignal ansteuert, um so Punkt-Emission auf den photoempfindlichen Körper zur Primärabtastung zu erzeugen, **gekennzeichnet durch** eine Treiberschaltung (15) und ein Leuchtintensität-Änderungsmittel (25), welches Leuchtintensität-Änderungsmittel die Leuchtintensität der Kantenemissions-EL-Elemente ändert durch Steuern der Anzahl von Impulsen, welche an die Kantenemissions-EL-Elemente angelegt werden in Übereinstimmung mit dem Drucksignal, das Druckdichte-Information für jedes Pixel enthält, um so einen Einzelpunkt zu bilden, wobei die Treiberschaltung den Zeilenkopf zum Erzeugen einer Vielzahl von Zeilenemissionen für eine einzige Primärabtastung ansteuert, so daß ein Einzelpixel mittels einer Vielzahl von Punkten gebildet wird.

2.  Kantenemissions-EL-Drucker nach Anspruch 1, **dadurch gekennzeichnet,** daß die Elemente so ausgelegt sind, daß sie in ihrer Leuchtdichte entsprechend der Anzahl von innerhalb einer vorbestimmten Zeit eingegebenen Eingangsimpulsen geändert werden, d.h mit der Frequenz der Eingangsimpulse, daß der Zeilenkopf einem photoempfindlichen Körper mit einer linearen Photoempfindlichkeits-Kennlinie benachbart so angeordnet ist, daß der photoempfindliche Körper sich kontinuierlich relativ zu dem Zeilenkopf zur Sekundärabtastung bewegen kann, wobei der Kantenemissions-EL-Drucker weiter umfaßt eine Treiberschaltung (31) und ein Druckdichte-Steuermittel (32), von denen die Treiberschaltung Impulse mit sich ändernden Frequenzen an den Zeilenkopf ausgibt und das Druckdichte-Steuermittel änderbar die Frequenz der Ausgangsimpulse der Treiberschaltung festsetzt.

3. Kantenemissions-EL-Drucker nach Anspruch 2, **gekennzeichnet durch** ein Druckdichtedaten-Haltemittel (42), welches Druckdichtedaten-Haltemittel ausgelegt ist, die Druckdichtedaten zu halten, welche die Frequenz der Ausgangsimpulse von der Treiberschaltung (31) festlegen, wobei das Druckdichte-Steuermittel (38) ausgelegt ist, die durch das Druckdichtedaten-Haltemittel gehaltenen Druckdichtedaten in der nötigen Weise zu ändern.

4. Kantenemissions-EL-Drucker nach Anspruch 2 oder 3, welcher weiter einen Aufzeichnungszahler (47) umfaßt, wobei der Aufzeichnungszahler ausgelegt ist, fortlaufend die Anzahl von Druckstücken eines Aufzeichnungsmediums zu zählen, und das Druckdichte-Steuermittel (46) den Zeilenkopf in Bezug auf seine Leuchtintensität entsprechend den Zählwerten des Aufzeichnungszählers steuert.

**Revendications**

1. Une imprimante EL à émission marginale (11) comprenant
une tête de lignes (12, 8) constituée de m x n dispositifs EL (2) à émission marginale connectés dans une configuration matricielle à m électrodes communes (16) et n électrodes en forme de blocs (17),
un corps photosensible (14, 36) placé de manière adjacente à ladite tête de lignes de sorte que ledit corps photosensible se déplace en continu par rapport à ladite tête de lignes pour un balayage secondaire, et
un circuit de commande entraînant ladite tête de lignes en fonction d'un signal d'impression de manière à produire une émission de points sur ledit corps photosensible pour un balayage primaire, caractérisée par un circuit de commande (15) et des moyens de changement d'intensité lumineuse (25), lesdits moyens de changement d'intensité lumineuse modifiant l'intensité lumineuse desdits dispositifs EL à émission marginale en contrôlant le nombre d'impulsions qui sont entrées dans lesdits dispositifs EL à émission marginale en fonction dudit signal d'impression contenant l'information de densité d'impression sur chaque pixel de manière à former un point unique, ledit circuit de commande entraînant ladite tête de lignes de manière à produire un ensemble d'émissions de lignes pour un balayage primaire unique de sorte qu'un seul pixel est formé au moyen d'un ensemble de points.

2. Une imprimante EL à émission marginale selon la revendication 1, caractérisée en ce que lesdits dispositifs sont disposés pour être changés en intensité lumineuse en fonction du nombre des impulsions d'entrée introduites pendant un temps prédéterminé, c'est-à-dire avec la fréquence des impulsions d'entrée, ladite tête de lignes est placée de manière adjacente à un corps photosensible présentant une caractéristique photosensible linéaire de sorte que ledit corps photosensible peut se déplacer en continu par rapport à ladite tête de lignes pour un balayage secondaire, ladite imprimante EL à émission marginale comprenant en outre un circuit de commande (31) et des moyens de contrôle (32) de la densité d'impression, ledit circuit de commande envoyant des impulsions à ladite tête de lignes à des fréquences différentes, et lesdits moyens de contrôle de densité d'impression déterminant de manière variable la fréquence des impulsions de sortie provenant dudit circuit de commande.

3. Une imprimante EL à émission marginale selon la revendication 2, caractérisée par des moyens de retenue de données de densité d'impression (42), lesdits moyens de retenue de données de densité d'impression étant conçus pour retenir les données de densité d'impression qui spécifient la fréquence des impulsions de sortie provenant dudit circuit de commande (31), lesdits moyens de contrôle (38) de la densité d'impression étant conçus pour changer, selon les besoins, les données de densité d'impression retenues par lesdits moyens de retenue de données de densité d'impression.

4. Une imprimante EL à émission marginale selon la revendication 2 ou 3, comprenant en outre un compteur d'enregistrement (47), ledit compteur d'enregistrement étant conçu pour accumuler le nombre de pièces imprimées d'un support d'enregistrement, et lesdits moyens de contrôle (46) de densité d'impression commandant ladite tête de lignes en intensité lumineuse en fonction des valeurs comptées par ledit compteur d'enregistrement.

# FIG.1(a)

ON

$+E_0$

$-E_0$

# FIG.1(b)

OFF

$+E_0$

$-E_0$

# FIG.1(c)

$\frac{1}{2}$ ON

$+E_0$

$-E_0$

# FIG.1(A)

LUMINOUS INTENSITY

TIME t ⟶

# FIG.1(B)

LUMINOUS INTENSITY

TIME t ⟶

# FIG.1(C)

LUMINOUS INTENSITY

TIME t ⟶

EP 0 393 981 B1

# FIG.2

# FIG.3

# FIG.4

EP 0 393 981 B1

# FIG.5

# FIG.6

# FIG.7

# FIG.8

# FIG.9

# FIG.10

# FIG.11

# FIG.12

# FIG.13
## (PRIOR ART)

# FIG.14
## (PRIOR ART)

# FIG.15

# FIG.16

$T_0(=T_1 \times 4)$

$T_1$  $T_1$  $T_1$  $T_1$

COM1

COM2

COM3

COM4

# FIG.17

1  2  3  4  1'  2'  3'  4'  1"  2"  3"  4"

ℓ LINE

(ℓ+1)LINE

EP 0 393 981 B1